(19) Europäisches Patentamt
European Patent Office
Office européen des brevets

(11) **EP 2 891 916 A1**

(12) **EUROPEAN PATENT APPLICATION**
published in accordance with Art. 153(4) EPC

(43) Date of publication:
**08.07.2015 Bulletin 2015/28**

(51) Int Cl.:
***G02B 21/34*** *(2006.01)*    ***G01B 11/00*** *(2006.01)*
***G01B 11/26*** *(2006.01)*    ***G02B 21/36*** *(2006.01)*

(21) Application number: **13847020.8**

(22) Date of filing: **07.10.2013**

(86) International application number:
**PCT/JP2013/005965**

(87) International publication number:
**WO 2014/061227 (24.04.2014 Gazette 2014/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.10.2012 JP 2012228149**

(71) Applicant: **Sony Corporation**
**Tokyo 108-0075 (JP)**

(72) Inventors:
• **HAYASHI, Kunihiko**
**Tokyo 108-0075 (JP)**
• **NARUSAWA, Ryu**
**Tokyo 108-0075 (JP)**
• **HIRONO, Yu**
**Tokyo 108-0075 (JP)**

(74) Representative: **Horner, David Richard**
**D Young & Co LLP**
**120 Holborn**
**London EC1N 2DY (GB)**

(54) **IMAGE-ACQUIRING DEVICE AND METHOD FOR MEASURING SLIDE INCLINATION**

(57)   [Object] To provide an image obtaining apparatus and a method of measuring an inclination of a slide, capable of measuring an inclination of a slide glass in a short time.

  [Solving Means] An image obtaining apparatus includes: a stage on which a slide is to be mounted, the slide being obtained by applying a sample to a slide glass and covering the sample with a cover glass; a stage moving unit configured to move the stage; a detection unit configured to detect a position of the sample on the slide; an optical angle measuring apparatus configured to irradiate the slide glass mounted on the stage with laser light from the side opposite to the side on which the sample is mounted, the optical angle measuring apparatus being capable of detecting an inclination of the slide glass; and a controller configured to control the stage moving unit such that the position of the sample on the slide is irradiated with the laser light, and to cause the optical angle measuring apparatus to detect the inclination.

FIG.9

**Description**

Technical Field

The present technology relates to an image obtaining apparatus (scanner) and a method of measuring an inclination of a slide, for correcting an inclination of a slide when taking images of a sample mounted on the slide glass and generating pathology images in the fields of medicine, pathology, biology, and the like.

Background Art

In the field of medicine, pathology, or the like, there is proposed a pathological diagnosis system in which images of cells, tissues, an organ, and the like of a living body obtained by an optical microscope are digitalized, and in which a doctor, a pathologist, or the like examines the tissues or the like or makes a diagnosis of a patient based on the digital images. In this system, a virtual slide scanner (hereinafter, abbreviated as scanner.) apparatus is configured to take images of the sample mounted on the slide glass, and to generate the digital images (virtual slides).

In the field of pathological diagnosis, it is necessary to increase not only the quality of digital images but also the speed of taking images. The reason is that, because in general 1000 to 2000 slides are prepared per day and diagnoses are made in a large hospital, diagnoses will be delayed and a scanner configured to generate digital images will be impractical unless the scanner reads each slide within two to three minutes at longest (reading speed). In view of this, not only increase of the quality of images but also increase of the scan speed is an important technological developmental matter for a scanner.

A method using a large image sensor is one method of increasing the scan speed. The large image sensor means a large-sized image sensor having 35 mm full-size (about 36 mm x about 24 mm), APC-C size (about 23.7 mm x about 15.6 mm), or the like.

For example, when an image of an area (15 mm x 15 mm), i.e., an area in a slide glass on which a sample is mounted, is taken, if an image sensor (1.3 megapixels, 1/3 inch in size) is used, it is necessary to take images about 2000 times. However, if an image sensor (24 megapixels, 35 mm full-size) is used, it is only necessary to take images about 100 times.

As described above, using a large image sensor is effective to increase the scan speed. However, on the other hand, when a large image sensor is used, one corner of an image may be blurred and it is difficult to autofocus on an object, which are problematic. The blur at one corner of an image means a phenomenon in which, if an area of an image taken at a time is large and if the sample inside a slide is vertically snaky by about several micrometers, part of the sample on a corner of the image-taking area is outside of the focal depth (for example about 0.2 to 0.6 micrometers), and the corner of the image is blurred.

Moreover, similar to the snaky sample, warpage of a slide glass will raise the same problem. The warpage phenomenon occurs because, when preparing a slide, a mountant filled between a slide glass and a cover glass is cured and contracts.

As a method of appropriately taking an image of a warped slide, there is known a method including, when taking an image, inclining a whole slide and adjusting the focal positions of the both corners such that the focal positions are within the focal depth (for example, see Patent Document 1). According to this method, the average of the inclination of the slide is calculated, and the slide is inclined based on the value.

In view of this, it is important to measure the inclination angle of the slide accurately. If an image sensor (35 mm full-size) is used, inclination of about 0.03 degrees will affect the result. In view of this, single-digit higher accuracy is required for accuracy of inclination detection.

As a method of detecting an inclination of a slide, there is known a method including calculating an inclination of a sample on a slide based on a signal, which shows the focusing status obtained by using optical path difference prisms installed in three positions and by using a dedicated image sensor (for example, see Patent Document 2).

Patent Document 1: Japanese Patent Application Laid-open No. 2012-13996
Patent Document 2: Japanese Patent Application Laid-open No. 2011-221280

Summary of Invention

Problem to be solved by the Invention

According to the method disclosed in Patent Document 2, since the focusing status is detected based on an actually-taken image, an inclination is detected reliably. On the other hand, an inclination is once adjusted, then an image is taken, and it is confirmed if the image is unblurred satisfactorily. Because of this, it takes a long time to take an image, which is problematic.

In view of the above-mentioned circumstances, it is an object of the present technology to provide an image obtaining apparatus and a method of measuring an inclination, capable of measuring an inclination of a slide glass in a short time.

Means for solving the Problem

(1) To solve the above-mentioned problem, according to an embodiment of the present technology, an image obtaining apparatus includes: a stage on which a slide is to be mounted, the slide being obtained by applying a sample to a slide glass and covering the sample with a cover glass; a stage moving unit configured to move the stage; a detection unit configured to detect a position of the sample on the slide; an optical angle measuring apparatus configured to irradiate the slide glass mounted on the stage with laser light from the side opposite to the side on which the sample is mounted, the optical angle measuring apparatus being capable of detecting an inclination of the slide glass; and a controller configured to control the stage moving unit such that the position of the sample on the slide is irradiated with the laser light, and to cause the optical angle measuring apparatus to detect the inclination. According to the present technology, because only one point on a slide is measured by using an optical angle measuring apparatus (autocollimator), an inclination can be measured in a short time. Moreover, the sample portion of the slide is irradiated with laser light from the autocollimator, and light passing through the sample portion is reduced. As a result, light reflected by a cover glass, which may disturb measurement, is reduced. As a result, it is possible to measure an inclination accurately even by using an autocollimator.

(2) To solve the above-mentioned problem, according to an embodiment of the present technology, the image obtaining apparatus may further include an inclination correcting unit configured to correct the inclination of a slide glass, in which the controller may be configured to cause the inclination correcting unit to correct the detected inclination.

(3) To solve the above-mentioned problem, according to the image obtaining apparatus of an embodiment of the present technology, the detection unit may be configured to change an object-to-be-detected from the position of the sample to the position of a label portion, and to detect the position of the label portion, and the controller may be configured to control the stage moving unit such that the back side of the label portion is irradiated with the laser light, and to cause the optical angle measuring apparatus to detect the inclination.

According to the present technology, because the back side of the label portion of the slide is irradiated with laser light from the optical angle measuring apparatus (autocollimator), light reflected by a cover glass does not disturb measurement, and it is possible to measure an inclination of a slide accurately.

(4) To solve the above-mentioned problem, according to the image obtaining apparatus of an embodiment of the present technology, the detection unit may be configured to detect the position of a label portion of the slide if the position of the sample is not detected, and the controller may be configured to control the stage moving unit such that the back side of the label portion is irradiated with the laser light, and to cause the optical angle measuring apparatus to detect the inclination.

According to the present technology, firstly, in order to irradiate the sample portion with laser light from the optical angle measuring apparatus (autocollimator), a sample position on the slide is to be detected. If a sample position is not detected, the back side of the label portion is irradiated with laser light, which is the second best way. As a result, there is a larger opportunity to detect an inclination of the slide.

(5) To solve the above-mentioned problem, according to an embodiment of the present technology, the image obtaining apparatus may further include a distance measuring apparatus configured to irradiate a measured-point on the surface of the slide glass with laser light, to receive light reflected by the surface of the slide glass, and to measure the distance to the surface of the slide glass, in which the controller may be configured to control the inclination correcting unit such that the inclination correcting unit sets a first measured-point, a second measured-point, and a third measured-point, the first measured-point, the second measured-point, and the third measured-point being three measured-points corresponding to the vertices of a right triangle, the first measured-point, the second measured-point, and the third measured-point being on a first corner, a second corner, and a third corner, the first corner, the second corner, the third corner, and a fourth corner being four corners of a peripheral area of the slide glass, and such that the inclination correcting unit calculates and corrects an inclination of the slide glass in a first direction based on measurement results at the first measured-point and the second measured-point obtained by the distance measuring apparatus, the first measured-point and the second measured-point being on one side extending in the first direction out of the two sides of the right triangle perpendicular to each other, and to control the inclination correcting unit such that the inclination correcting unit calculates and corrects an inclination of the slide glass in a second direction based on measurement results at the second measured-point and the third measured-point obtained by the distance measuring apparatus, the second measured-point and the third measured-point being on the other side extending in the second direction.

According to the present technology, distances to three points on the slide are measured by using the distance measuring apparatus, and an inclination of the slide is obtained. Because distances to only three points are measured, an inclination can be measured in a short time.

(6) To solve the above-mentioned problem, according to the image obtaining apparatus of an embodiment of the present technology, the controller may be configured if measurement of the distance to a measured-point fails, to set at least a new fourth measured-point on the fourth corner, and to cause the distance measuring apparatus to measure the distance to the fourth measured-points.

According to the present technology, an inclination is not corrected if distances to three measured-points are unknown. So if measurement of the distance to a measured-point fails, a measured-point is newly provided, and distances to three points are measured. As a result, there is a larger opportunity to detect an inclination of the slide.

(7) To solve the above-mentioned problem, according to the image obtaining apparatus of an embodiment of the present technology, the controller may be configured if measurement at the first measured-point fails, to calculate and correct an inclination in the first direction by using the third measured-point and the fourth measured-point, if measurement at the second measured-point fails, to calculate and correct an inclination in the second direction by using the fourth measured-point and a fifth measured-point newly set on the first corner, and if measurement at the third measured-point fails, to calculate and correct an inclination in the second direction by using the fourth measured-point and a fifth measured-point newly set on the first corner, and to calculate and correct an inclination in the first direction by using the fifth measured-point and a sixth measured-point newly set on the second corner.

According to the present technology, if measurement of the distance to any one of three measured-points fails, the necessary number of measured-points are newly provided, and the distances to three points are measured. As a result, there is a larger opportunity to detect an inclination of the slide.

(8) To solve the above-mentioned problem, according to the image obtaining apparatus of an embodiment of the present technology, the distance measuring apparatus may be configured to measure the distance from the side opposite to the side of the slide glass on which the sample is mounted, the slide glass being mounted on the stage.

According to the present technology, in order to measure distances, the side opposite to the side of the slide glass on which the sample is mounted is irradiated with laser light, and distances are measured. So it is possible to measure the distances to the slide glass easily and to calculate an inclination of the slide glass while a sample, a mountant, a cover glass, or a label does not block the optical path.

(9) To solve the above-mentioned problem, according to an embodiment of the present technology, the image obtaining apparatus may further include a distance measuring apparatus configured to irradiate a measured-point on the surface of the slide glass with laser light, to receive light reflected by the surface of the slide glass, and to measure the distance to the surface of the slide glass, in which the controller may be configured if the optical angle measuring apparatus fails to detect the inclination at the back side of the label portion, to cause the distance measuring apparatus to detect the inclination.

According to the present technology, firstly, an inclination is to be measured by using the optical angle measuring apparatus (autocollimator). Firstly, an inclination is to be measured at the lower side of the sample. If the position of the sample is not determined, next, an inclination is to be measured at the label portion. If measurement at the label portion also fails, measurement by using the autocollimator is terminated, and measurement by using a distance measuring apparatus is started. As a result, there is a larger opportunity to detect an inclination of the slide.

(10) To solve the above-mentioned problem, according to an embodiment of the present technology, the image obtaining apparatus may further include a distance measuring apparatus configured to irradiate a measured-point on the surface of the slide glass with laser light, to receive light reflected by the surface of the slide glass, and to measure the distance to the surface of the slide glass, in which the controller may be configured to cause the optical angle measuring apparatus to detect the inclination, in addition, to cause the distance measuring apparatus to detect the inclination, and to cause the inclination correcting unit to correct the inclination based on the average of the detected inclinations.

(11) To solve the above-mentioned problem, according to an embodiment of the present technology, a method of measuring an inclination of a slide include: mounting a slide on a stage, the slide being obtained by interposing a sample between a slide glass and a cover glass; detecting a position of the sample on the slide; and irradiating the detected position of the sample with laser light from the side opposite to the side of the slide glass on which the sample is mounted, the laser light being from an optical angle measuring apparatus, and detecting an inclination of the slide glass on the stage.

Effect of the Invention

As described above, according to the present technology, it is possible to measure an inclination of a slide glass in a short time.

Brief Description of Drawings

[Fig. 1] A diagram showing that an inclination of a slide is measured by using an autocollimator 10 at the lower side of a slide glass.

[Fig. 2] A diagram showing front surface reflection and back surface reflection of a slide 16.

[Fig. 3] A graph showing the relation between intensity and positions of light-reflected-by-front-surface A' and the light-reflected-by-back-surface B'.

[Fig. 4] A diagram showing the light-reflected-by-back-surface B' reflected by a very snaky cover glass 14.

[Fig. 5] A diagram showing that, if a detected front-surface spot overlaps with a detected back-surface spot, the center of gravity of those spots is synthesized.

[Fig. 6] A diagram showing a method of preparing a laser emitter 10A and a detector 10B independently as the autocollimator 10 and emitting light obliquely.

[Fig. 7] A diagram showing that the lower side of the label portion 15 of the slide 16 is irradiated with laser light from the autocollimator 10, and an inclination is measured.

[Fig. 8] A diagram showing that the inclination of the label portion 15 of the slide glass 11 is different from the inclination of the portion of the slide glass 11 on which the sample 12 is mounted.

[Fig. 9] A diagram showing that the side of the slide 16 below the sample 12 is irradiated with laser light from the autocollimator 10, and an inclination is measured.

[Fig. 10] A flowchart showing the processing flow of determining the position of the sample 12 on the slide 16 and measuring an inclination.

[Fig. 11] A flowchart showing a combination flow including the process of measuring an inclination if the position of the sample 12 on the slide 16 is determined, and the process of measuring an inclination if it is not determined.

[Fig. 12] A diagram showing that an inclination of the slide 16 is measured by using four height gauges 20 at the lower side of the slide glass 11.

[Fig. 13] A diagram showing a measuring method using a height gauge in the past.

[Fig. 14] A diagram showing the basic idea of the measuring method of the present technology.

[Fig. 15] A diagram showing that there are unmeasurable measured-points, and that measured-points are newly provided.

[Fig. 16] A flowchart illustrating the flow of a specific example of the measuring method of the present technology including the solving means.

[Fig. 17] A diagram illustrating the method of approximating an inclination of a severely-curved slide 16 based on a plurality of planes and measuring the inclination.

[Fig. 18] A diagram illustrating the method of approximating an inclination of a severely-curved slide 16 based on a quadratic equation and measuring the inclination.

[Fig. 19] A flowchart showing the flow using the autocollimator and the height gauge in combination.

[Fig. 20] A flowchart showing another flow using the autocollimator and the height gauge in combination.

Mode for Carrying Out the Invention

Hereinafter, an embodiment of the present technology will be described with reference to the drawings. In the present technology, two methods will be described as methods of measuring an inclination of a slide glass. One method is a method using an inclination detector called autocollimator, and the other method is a method using a height gauge.

If an autocollimator is used, it is possible to measure an inclination with a high degree of accuracy, accurately, and at high speed. On the other hand, only a local inclination can be measured because an inclination at one point is measured. An inclination may not be measured accurately if it is not possible to distinguish between front surface reflection and back surface reflection of a slide.

Moreover, if a height gauge is used, because heights of at least three points are measured according to the present technology, an average inclination of a slide glass can be calculated. On the other hand, because heights of three points should be measured, it takes a longer time for measurement than the method using an autocollimator.

Note that, in order to measure heights at three points, there are a method using three height gauges, and a method including moving a stage and measuring heights at three points by using one height gauge. Because the former is capable of measuring heights at three points in parallel simultaneously, the measurement time is equal to or less than 1/3 of that of the latter, but it is expensive to prepare three height gauges. The latter is lower in cost, but requires a longer measurement time because it is necessary to move a stage to thereby adjust three measurement points of a slide at the measurement position of a height gauge, and to measure heights in order.

A scanner of the present technology may use one of the method using an autocollimator and the method using a height gauge. Alternatively, the scanner may include both of them, and may select one of the methods depending on needs of a user or may use one measuring method if the other measuring method fails.

Hereinafter, a method using an autocollimator will be described in detail at first, then a method using a height gauge will be described in detail, and a method using both an autocollimator and a height gauge in combination will be described in detail at last.

<Methods using autocollimator>

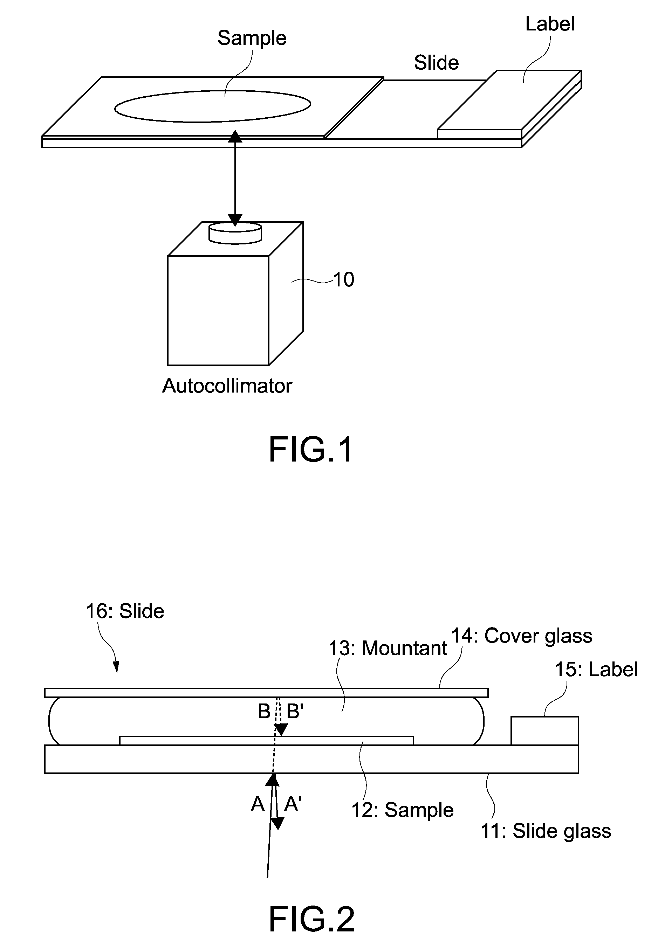

Here, a method of measuring an inclination of a slide glass mounted on a stage of a microscope by using an autocollimator will be described. Fig. 1 is a diagram showing that an inclination of a slide is measured by using an autocollimator 10 at the lower side of a slide glass.

An autocollimator irradiates a surface to be measured with laser light. The reflection angle of the reflected light is detected, and an inclination of the surface to be measured is thereby measured. As a result, as described above, because an inclination is measured by only measuring an inclination at one point, an autocollimator is characterized in that it can measure an inclination at higher speed than a method including measuring heights of at least three points and surface-synthesizing the heights to thereby obtain an inclination.

[Problem of front surface reflection and back surface reflection]

An autocollimator is good at measuring an inclination of the surface of a reflector such as a mirror. On the other hand, an autocollimator detects both front surface reflection and back surface reflection if an object is a transparent object such as a slide glass, which is problematic. Fig. 2 is a diagram showing front surface reflection and back surface reflection of a slide 16.

Laser light A emitted from the autocollimator 10 is mainly reflected by the lower-side surface of a slide glass 11 (light-reflected-by-front-surface A'), and returns to the autocollimator 10. At this time, part of the laser light passes through the slide glass 11, a sample 12, a mountant 13, and a cover glass 14 (laser light B), and reflected by the upper-side surface of the cover glass 14 (light-reflected-by-back-surface B'). Because the refractive index of the slide glass 11 is approximately the same as the refractive index of the mountant 13, light is less reflected by the interface therebetween.

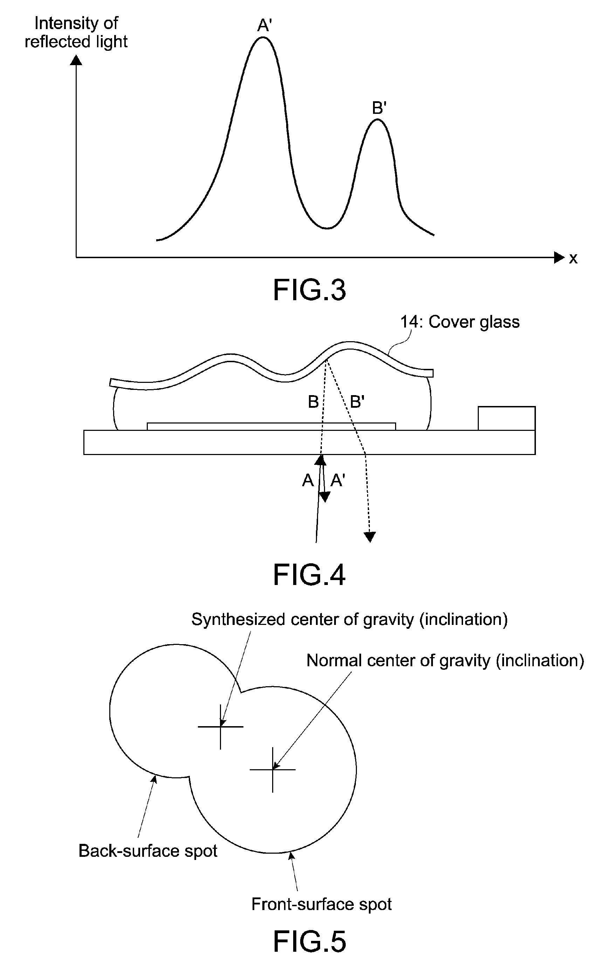

Usually, as shown in Fig. 3, because the intensity of the light-reflected-by-front-surface A' is higher than the intensity of the light-reflected-by-back-surface B' (amount of light is larger), by measuring the position of the center point of the reflected light having higher intensity, an inclination of the lower surface of the slide glass 11 can be measured.

However, if the lower-side surface of the slide glass 11 has foreign particles attached thereto or is dirty, the light-reflected-by-back-surface B' has a higher intensity, and an inclination of the cover glass 14 side may be measured erroneously.

In general, the thickness of a slide glass is about 0.9 mm to 1.7 mm, and the thickness of a cover glass is only about 0.1 mm to 0.2 mm. Because of this, the cover glass 14 is likely to be affected by contraction of a mountant when the mountant is cured. As shown in Fig. 4, the cover glass 14 is likely to be snakier than the slide glass 11.

Because of this, if the intensity of the light-reflected-by-back-surface B' is higher, an inclination of the cover glass 14 is measured and an inclination of the slide 16 therefore are not measured appropriately, which are problematic.

Moreover, if the spot (front-surface spot) of the light-reflected-by-front-surface A' returning to the autocollimator 10 overlaps with the spot (back-surface spot) of the light-reflected-by-back-surface B' returning similarly, the center of gravity of the front-surface spot is not calculated accurately and an inclination is not calculated appropriately, which are problematic.

Fig. 5 is a diagram showing that, if a detected front-surface spot overlaps with a detected back-surface spot, the center of gravity of those spots is synthesized. Normally, an inclination is not measured accurately unless the position of the center of gravity of only a front-surface spot is obtained. However, as shown in this figure, both the spots including the back-surface spot are recognized as one spot, a center of gravity is synthesized, and an error is observed, which are problematic.

Because of the above-mentioned problems, when measuring an inclination of the slide 16 by using the autocollimator 10, only light-reflected-by-front-surface should be detected.

[Method only using light-reflected-by-front-surface (No. 1)]

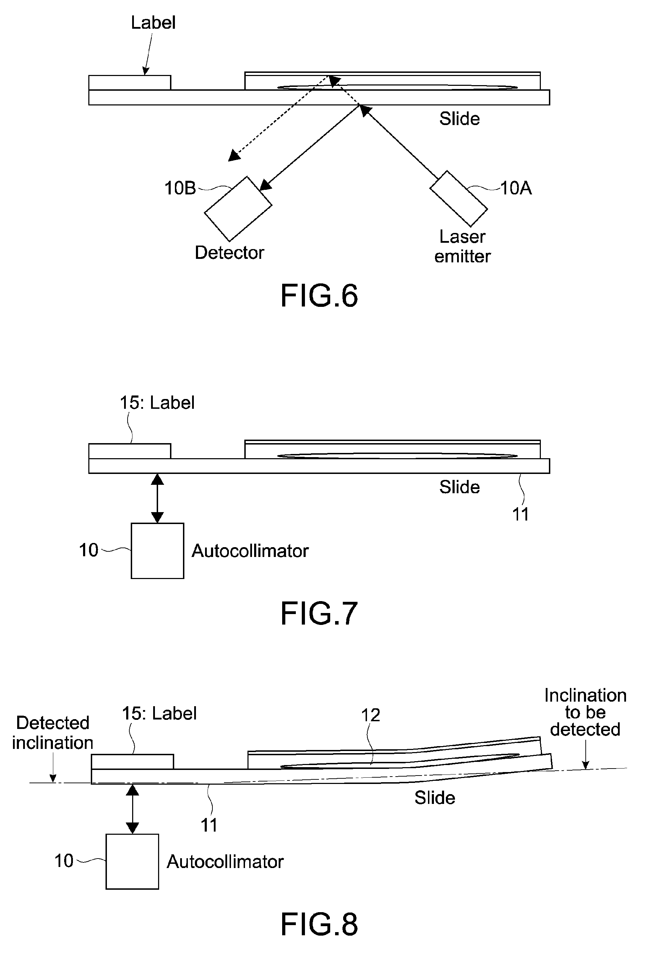

As shown in Fig. 6, a method of preparing a laser emitter 10A and a detector 10B independently as the autocollimator 10 and emitting light obliquely is one method of detecting only light-reflected-by-front-surface. According to this method, as shown in this figure, the position of reflection of a light-reflected-by-back-surface is different from the position of reflection of a light-reflected-by-front-surface, the light-reflected-by-back-surface is separated from the light-reflected-by-front-surface, and only the light-reflected-by-front-surface can therefore be extracted.

However, because the laser emitter 10A and the detector 10B are prepared individually, it is necessary to prepare a larger installation space, it is difficult to adjust the optical axes, the distance to an object-to-be-measured is restricted, and the like, which are problematic. It is difficult to mass-produce them. Because of this, the present technology does not employ this structure.

[Method only using light-reflected-by-front-surface (No. 2)]

A method only using light-reflected-by-front-surface described next is a method using the property of a pathology slide.

When a pathology slide is prepared, in order to show a patient's name or other information, a label is adhered to the slide glass 11, information is written with a pen on a frosted-glass portion of a glass corresponding to a label, or information is printed on the frosted-glass portion of a glass by using a printer.

Even if such a labeled portion or a frosted-glass portion (hereinafter referred to as label portion 15) is irradiated with laser light from the lower side of the slide 16, light-reflected-by-back-surface is not generated. In view of this, as shown in Fig. 7, it is possible to measure an inclination of the slide glass 11 by using this property.

However, in some slides, the inclination of the label portion 15 of the slide glass 11 is different from the inclination of the portion of the slide glass 11 on which the sample 12 is mounted. Fig. 8 shows that the inclination of the label portion 15 of the slide glass 11 is different from the inclination of the portion of the slide glass 11 on which the sample 12 is mounted. This phenomenon occurs because the label portion 15 or the portion around that is less affected by contraction of the mountant 13 when it is cured since the label portion 15 or the portion around that is free from the mountant 13, or because contraction of the mountant 13 is large when it is cured.

As described above, according to the method of measuring an inclination below the label portion 15, in some slides, an inclination of the slide 16 to be detected is sometimes different from the actually-detected inclination, which should be considered.

[Method only using light-reflected-by-front-surface (No. 3)]

A method only using light-reflected-by-front-surface described next is another method using the property of a pathology slide.

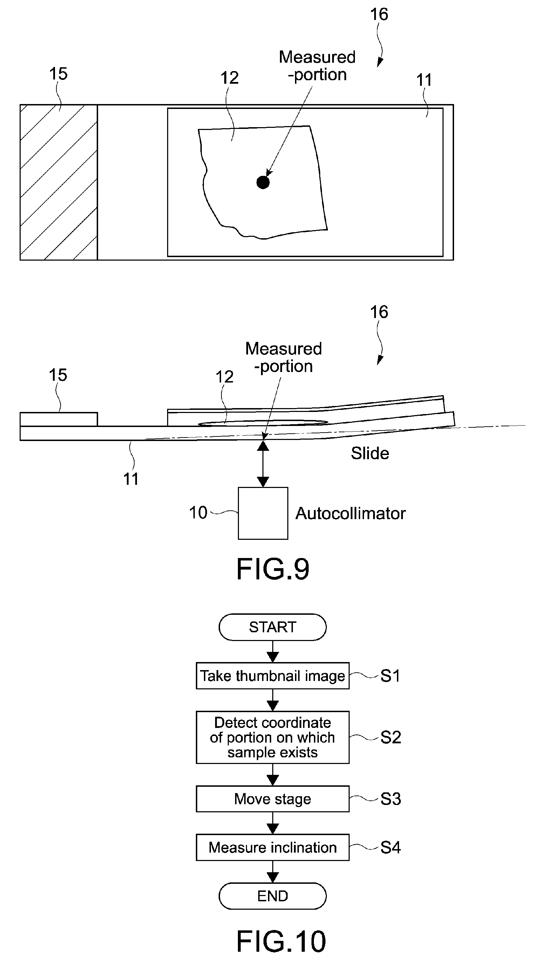

According to this method, as shown in Fig. 9, part of the slide 16, on which the sample 12 is mounted, is irradiated with laser light from the autocollimator 10, and an inclination at this position is measured.

According to this method, because the sample 12 scatters the laser light, it is possible to reduce the amount of light-reflected-by-back-surface or completely eliminate the amount of light. Even if the amount of the light-reflected-by-back-surface are not eliminated completely, because the amount of the light-reflected-by-back-surface is reliably smaller than the amount of the light-reflected-by-front-surface, the above-mentioned front-surface spot is not confused with the back-surface spot, and an inclination can be measured appropriately.

According to this method, it is necessary to determine the position of the sample 12 on the slide 16 accurately. To do so, the following process will be performed. Fig. 10 is a flowchart showing the processing flow of determining the position of the sample 12 on the slide 16 and measuring an inclination.

Note that a scanner (image obtaining apparatus) includes a thumbnail-image-taking unit (image-taking unit), controller, an image recognizing unit (detection unit), a stage moving unit, a stage, the autocollimator 10 (optical angle measuring apparatus), and an inclination correcting unit. They are not shown.

Firstly, in response to an instruction from the controller, the thumbnail-image-taking unit takes an image of the whole slide 16 (Step S1). The image is taken by using transmitted light. The taken image of the whole slide 16 will be referred to as a thumbnail image.

Next, in response to an instruction from the controller, the image recognizing unit calculates the coordinate of a portion of the thumbnail image, on which the sample 12 is highly likely to exist (Step S2).

Specifically, the image recognizing unit performs the following image recognition process, i.e., detects the coordinate of the portion having the lowest brightness except the edge portion and the label portion 15 of the slide 16 from the thumbnail image taken by using transmitted light. This is because the sample 12 is highly likely to be on the portion having the lowest brightness.

In order that the image recognizing unit may not detect foreign particles erroneously, a predetermined threshold is prepared. The following calculation is performed. If the image recognizing unit detects a portion having a brightness larger than the threshold, the image recognizing unit determines that the coordinate of this portion is a position, on which the sample 12 is highly likely to exist.

Next, in response to an instruction from the controller, the stage moving unit moves the stage on which the slide 16 is mounted, and moves a position, which is irradiated with laser light from the autocollimator 10, to the position, on which the sample 12 is highly likely to exist (Step S3).

Finally, in response to an instruction from the controller, the autocollimator 10 measures an inclination of the slide 16 (Step S4).

As described above, if the position, on which the sample 12 is highly likely to exist, is irradiated with laser light, the amount of light-reflected-by-back-surface is decreased, and it is therefore possible to measure an inclination of the slide 16 accurately in a short time.

Note that after an inclination of the slide 16 is measured appropriately, the inclination correcting unit corrects the inclination of the slide 16 and takes an appropriate pathology image, in which no corner of the pathology image is blurred or the like. The method of correcting an inclination is any one of inclining only the slide glass 11, correcting an inclination of the stage on which the slide 16 is mounted, and correcting an inclination by an optical system side configured to take an image.

[Method only using light-reflected-by-front-surface (combination)]

Next, the combination of the above-mentioned method only using light-reflected-by-front-surface (No. 2) and the above-mentioned method only using light-reflected-by-front-surface (No. 3) will be described.

This method is effective if it is not possible to determine a portion of the thumbnail image at all, on which the sample 12 is highly likely to exist, because the sample 12, e.g., a fat cell, is light colored, the sliced sample is thin, or the sample 12 is stained weakly.

According to this method, if it is not possible to determine a portion, on which the sample 12 is highly likely to exist, for emergency, the stage is moved such that a position, which is irradiated with laser light from the autocollimator 10, comes below the label portion 15, and an inclination is measured.

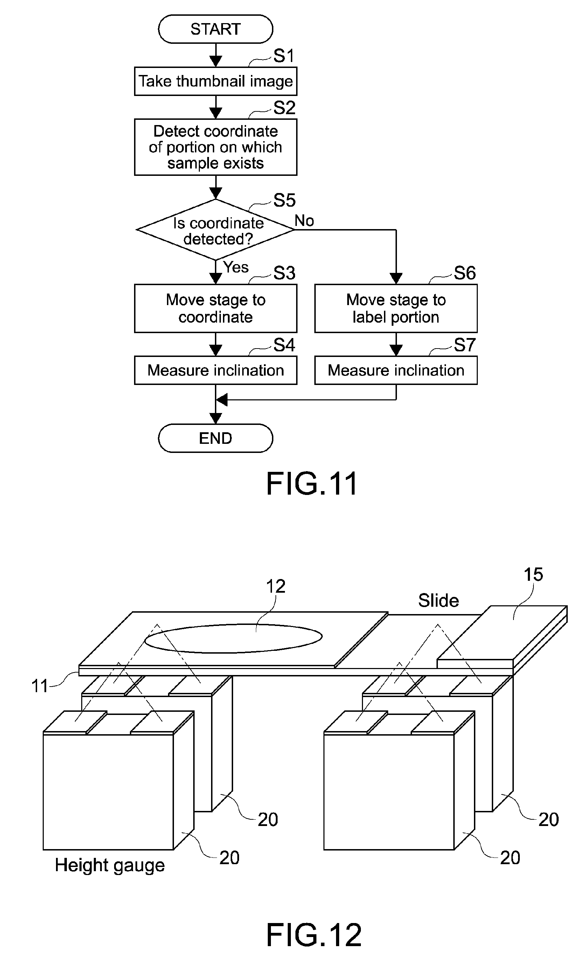

Fig. 11 is a flowchart showing a combination flow including the process of measuring an inclination if the position of the sample 12 on the slide 16 is determined, and the process of measuring an inclination if it is not determined. Note that because the process of Steps S1 to S4 is the same as the above-mentioned process, description thereof will be omitted.

After the process of Step S1 and Step S2, i.e., after the image recognizing unit tries to detect a portion of a thumbnail image, on which the sample 12 is highly likely to exist, in Step S2, the controller determines if a portion is detected successfully (Step S5).

In Step S5, if it is determined that the sample 12 is not successfully detected (Step S5, No), in response to an instruction from the controller, the stage moving unit moves the stage such that a position, which is irradiated with laser light from the autocollimator 10, comes below the label portion 15 of the slide 16 (Step S6).

Next, the autocollimator 10 measures an inclination of the slide 16 (Step S7).

As described above, even if a portion, on which the sample 12 is highly likely to exist, is not detected, an inclination is measured at the label portion 15. So the chance of obtaining an appropriate inclination is increased.

The methods of measuring an inclination of the slide 16 by using the autocollimator 10 in a short time have been described.

<Method using height gauge>

Here, a method of measuring and correcting an inclination of the slide glass 11 mounted on the stage of the microscope by using a height gauge will be described. Fig. 12 is a diagram showing that an inclination of the slide 16 is measured by using four height gauges 20 at the lower side of the slide glass 11. Note that although the four height gauges 20 are used in this figure, it is only necessary to measure heights of at least three points as described above, and the number of the height gauges 20 is not necessarily four.

Note that examples of a height gauge include a contact gauge and a contactless gauge. In theory, each type of gauge is capable of measuring heights. However, a contactless height gauge, above all, an optical height gauge is preferable because it includes a means for confirming the presence of foreign particles or the like at measured-portions. Because of this, in the present technology, the optical contactless height gauge is used.

In an optical contactless height gauge, a measured object is irradiated with laser light emitted from a light-emitting unit, a right-receiving unit receives the reflected light, and the height is measured based on the principle of triangulation. So if foreign particles are attached to a measured-portion, reflected light is attenuated or no reflected light returns at all. As a result, it is possible to confirm the presence of foreign particles.

[Measuring method in the past]

Firstly, a measuring method using a height gauge in the past will be described in order to show that it is possible to measure an alignment in a short time even if a height gauge is used in the present technology.

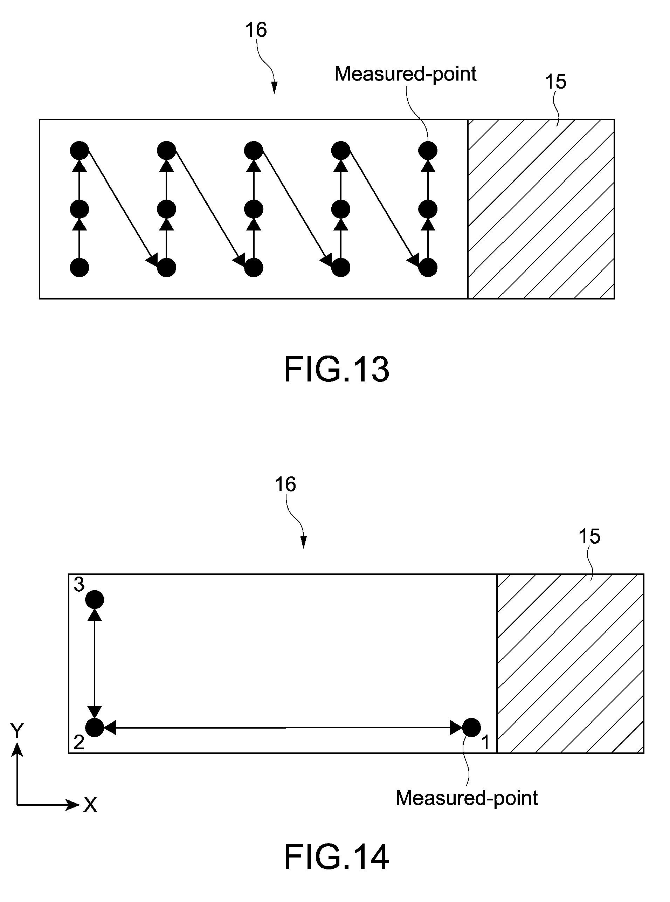

Fig. 13 is a diagram showing a measuring method using a height gauge in the past. In the past, heights of the area of the slide 16 except the label portion are measured evenly, a least square plane is calculated based on the obtained heights, and an inclination is obtained. As shown in this figure, heights of fifteen measured-points are measured, and an inclination of the slide 16 is modified based on the measurement result. If the modified inclination is within a reference value, adjustment of the inclination is finished. If the inclination is not within the reference value, heights of the fifteen measured-points are measured again. As described above, in the past method, an inclination is measured with a high degree of accuracy because the number of measured-points is large. Meanwhile, because it is necessary to measure heights 15xN times (N is a natural number), it is not possible to measure and correct an inclination in a short time.

[Measuring method of the present technology (basic idea)]

Next, the reason that it is possible to measure and correct an inclination in a short time according to the present technology will be described. The reasons are that the number of measured-points is as small as at least three, and that both inclinations of the slide 16 in the X axis direction and in the Y axis direction are measured and corrected independently. Fig. 14 is a diagram showing the basic idea of the measuring method of the present technology. Hereinafter description will be made with reference to this figure.

Note that in the following description, it is supposed that a scanner includes one height gauge 20. This is because even if a structure including a plurality of height gauges 20 can measure an inclination in a shorter time, it is expensive and therefore unrealistic. Note that in the following description, a stage on which the slide 16 is mounted is moved in order to measure heights of three points. Alternatively, the height gauge 20 may be moved.

The reasons of providing at least three measured-points are that an equation of a plane whose inclination is to be obtained can be generated by measuring at least three points, and that the smaller number of measured-points is better from a viewpoint of time required to move a stage such that a measured-point of the slide 16 comes to the position measured by the height gauge 20 and a viewpoint of a measurement time at the measured-point.

Moreover, the three measured-points are at three corner portions out of the four corner portions of the slide 16. This is because if measured-points are at outer corners of the slide 16, the distances between measured-points are larger, and it is therefore possible to reduce errors when obtaining an inclination of the slide 16.

Moreover, if an inclination of the slide 16 in the X axis direction and that in the Y axis direction are adjusted independently, where the X axis is in the long side direction of the slide glass and the Y axis is in the short side direction, preferably, three measured-points form a right triangle on the surface of the slide glass, and the two perpendicular sides of the right triangle are in parallel with the X axis and the Y axis, respectively. Note that hereinafter description will be made based on a situation in which the X axis in the direction of the long side of the slide glass is the same as the X axis of the stage, and the Y axis in the direction of the short side of the slide glass is the same as the Y axis of the stage.

Note that in the following process, heights of the three measured-points are not measured collectively to measure an inclination of the plane. Instead, heights of only two measured-points are measured, linear interpolation is performed, and an inclination of a plane in only one direction (for example, the X axis direction) is measured and corrected. Then an inclination in the other perpendicular direction is measured and corrected.

Note that the scanner (image obtaining apparatus) includes a thumbnail-image-taking unit (image-taking unit), a controller, an image recognizing unit (detection unit), a stage moving unit, a stage, the height gauge 20 (distance measuring apparatus), and an inclination correcting unit. They are not shown.

Firstly, the controller instructs the stage moving unit to move the stage such that the position of a measured-point 1, which is obtained by recognizing a thumbnail image, comes to the position measured by the height gauge 20, and causes the height gauge 20 to measure the height of a measured-point 1. Next, the controller instructs the stage moving unit to move the stage such that the height can be measured at the position of a measured-point 2, and measures the height of the measured-point 2. Note that preferably, the position of the measured-point 2 is such that the line connecting the measured-point 1 and the measured-point 2 is in parallel with the X axis.

Next, the controller calculates an inclination in the X axis direction based on the two measured heights, and determines if the inclination is within a reference value or not. The reference value is predetermined by previously examining an inclination with which no corner of an image is blurred or the like if the scanner uses a large image sensor.

If the measured inclination is not within the reference value, the inclination correcting unit corrects the inclination of the slide 16 such that the corrected inclination is within the reference value. Note that similar to the above-mentioned method using the autocollimator 10, the method of correcting an inclination is any one of inclining or tilting only the slide glass 11, correcting an inclination of the stage on which the slide 16 is mounted, and correcting an inclination by an optical system side configured to take an image.

Next, the controller causes the height gauge 20 to measure the height of the measured-point 2 again, moves the stage such that the height is measured at the position of a measured-point 3, and causes the height gauge 20 to measure the height of the measured-point 3. Preferably, the position of the measured-point 3 is such that the line connecting the measured-point 2 and the measured-point 3 is in parallel with the Y axis.

Then, the controller calculates an inclination in the Y axis direction based on the two measured heights, and determines if the inclination is within a reference value or not. Then, the inclination correcting unit corrects the inclination of the slide 16 such that the measured inclination is within the reference value.

As described above, according to the present technology, because heights of at least three measured-points are measured basically, heights are measured only at least three times, and the stage is moved only at least twice. Note that the number of times of measuring heights and the number of times of moving the stage are increased every time an inclination is corrected.

The basic idea of the measuring method of the present technology has been described.

[Problem of the basic idea of the present technology]

The above-mentioned basic idea of the measuring method of the present technology still has the following problem. If foreign particles, dust, a fingermark, or the like are/is attached to a measured-point of the slide 16 or a measured-point is dirty because the mountant 13 is partly outside of the slide 16, when the measured-point is irradiated with light from the height gauge 20, reflected light may not return appropriately, and the height may be therefore measured poorly because the amount of light is not enough. If the height of one measured-point is not measured, the number of valid measured-points is two or less, and it is therefore not possible to measure an inclination of a plane.

[Means for solving the problem of the present technology]

A means for solving the above-mentioned problem of the present technology is as follows. In short, if the height of at least one of at least three measured-points is not measured appropriately, another measured-point is newly provided, the heights of three points are measured, and an inclination of a plane is therefore obtained and corrected.

Another measured-point may be newly provided at the fourth corner portion, to which a measured-point was not provided. Also in this case, as described above, preferably, the new measured-point is provided such that three measured-points form a right triangle and the two perpendicular sides of the right triangle are in parallel with the X axis and the Y axis, respectively.

If the height of any point is still unmeasurable after the fourth measured-point is provided, a measured-point is newly provided inside a rectangle formed by the first four measured-points, and the height thereof is measured.

What is important to provide another measured-point is that, because foreign particles or the like may be attached to an unmeasurable point, a new measured-point is provided at a position, which may not be affected by the foreign particles or the like. Note that the term unmeasurable means not only that the amount of reflected light from an object-to-be-measured is not enough to measure the height but also that the height that the height gauge shows is an unusual value.

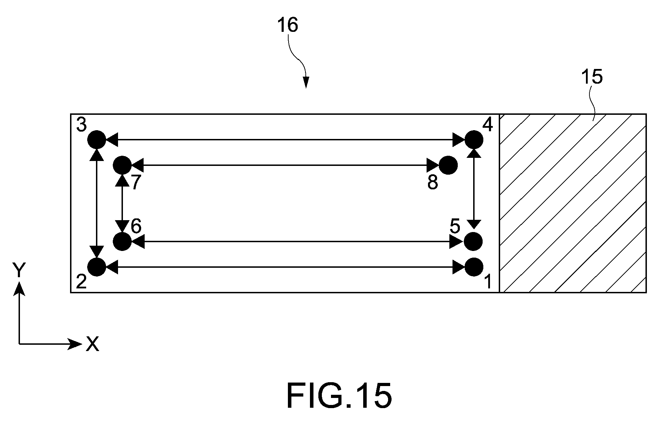

Fig. 15 is a diagram showing that there are unmeasurable measured-points, and that measured-points are newly provided. As shown in this figure, as described in the basic idea of the measuring method of the present technology, at first, the heights of the measured-point 1 to the measured-point 3 in the outer periphery of the area of the slide 16 other than the label portion 15 are to be measured. However, if there is an unmeasurable point in those measured-points, next, a measured-point 4 is provided at the upper-right corner out of the four corners of the slide 16, to which a measured-point was not provided, and the heights of the measured-point 2 to the measured-point 4 of the slide 16 are to be measured.

If there is an unmeasurable point in the measured-point 2 to the measured-point 4 again, next, a new measured-point 5 is provided at the lower-right corner of the slide 16 and inside the measured-point 1, and the heights of the measured-point 3 to the measured-point 5 of the slide 16 are to be measured.

Note that in this figure, for example, the new measured-point 5 is provided at the lower-right corner of the slide 16 and inside the measured-point 1, which is just an example. The position of the new measured-point at the same corner may not be inside. As described in "what is important to provide another measured-point", a new measured-point may be provided at a position, which may not be affected by foreign particles on an unmeasurable point.

Note that in order to measure an inclination composition in the X axis direction and an inclination composition in the Y axis direction accurately, measured-points are provided such that the line connecting two measured-points used to measure an inclination is in parallel with the X axis or the Y axis, preferably.

Similarly, in this figure, a measured-point 8 and lower are provided, and their heights are measured again and again.

Note that in the present technology, at first, heights of corners of the slide 16 at the outer periphery are measured. This is because, as described above, if measured-points are at outer corners of the slide 16, the distances between measured-points are larger, and it is therefore possible to reduce errors when obtaining an inclination of the slide 16.

Moreover, in the above description, the measured-points are provided in the area of the slide 16 outside of the label portion 15. Alternatively, it is acceptable to provide measured-points also in the area of the slide glass 11, on which the label portion 15 is provided. Note that because heights of two areas having different curvatures are measured, the accuracy of a measured inclination of the slide 16 is lower than the accuracy of a measured inclination when measured-points are provided only in an area outside of the label portion 15.

Moreover, in the above description, the four corner portions of the slide 16 are in order used to provide measured-points. Alternatively, measured-points may only be provided on three corner portions, and if there is an unmeasurable point, new measured-points may be provided on those three corner portions. Also according to this structure, as described above, preferably, three measured-points form a right triangle.

According to the above-mentioned solving means, heights of at least three points are measured, and only if there is an unmeasurable point because there are foreign particles or the like, a measured-point is additionally provided instead of the unmeasurable point. As a result, it is possible to measure and correct an inclination of the slide 16 at the minimum number of times of measurement.

[Rule of the measuring method of the present technology including the solving means (specific example)]

Next, a basic rule of measuring and correcting an inclination of the slide 16 of the present technology including the above-mentioned solving means will be described.

(1) Measured-points N and measured-points N+1 are provided on four corners of the area outside of the label portion 15, which is obtained by recognizing a thumbnail image, toward the inner periphery side in order.
(2) The height of the measured-point N (N is natural number) and the height of the measured-point N+1 are measured, and an inclination is measured only in one direction.
(3) If N is odd, an inclination in the X axis direction is measured and corrected. Note that the relation of the position of the slide 16, the X axis, and the Y axis is as shown in Fig. 15.
(4) If N is even, an inclination in the Y axis direction is measured and corrected.
(5) If an inclination in the X axis direction is within a reference value and an inclination in the Y axis direction is within the reference value, measurement and correction are finished.
(6) If an inclination is not within the reference value, measurement and correction are retried again and again.
(7) Even if an inclination is not within the reference value, if the number of retry exceeds the maximum number of retry, N is incremented by one, a new measured-point is provided, and measurement and correction are performed.
(8) If the measured-point N is unmeasurable, N is incremented by one, a new measured-point is provided, and measurement and correction are performed.
(9) If the measured-point N+1 is unmeasurable, N is incremented by two, a new measured-point is provided, and measurement and correction are performed.
(10) If an inclination is not within the reference value, the value N is incremented. If the value N exceeds a measured-point limit value, then it means an error, and measurement and correction are finished.

A specific example of the rule of the measuring method of the present technology including the means for solving the problem has been described.

[Flow of the measuring method of the present technology including the solving means (specific example)]

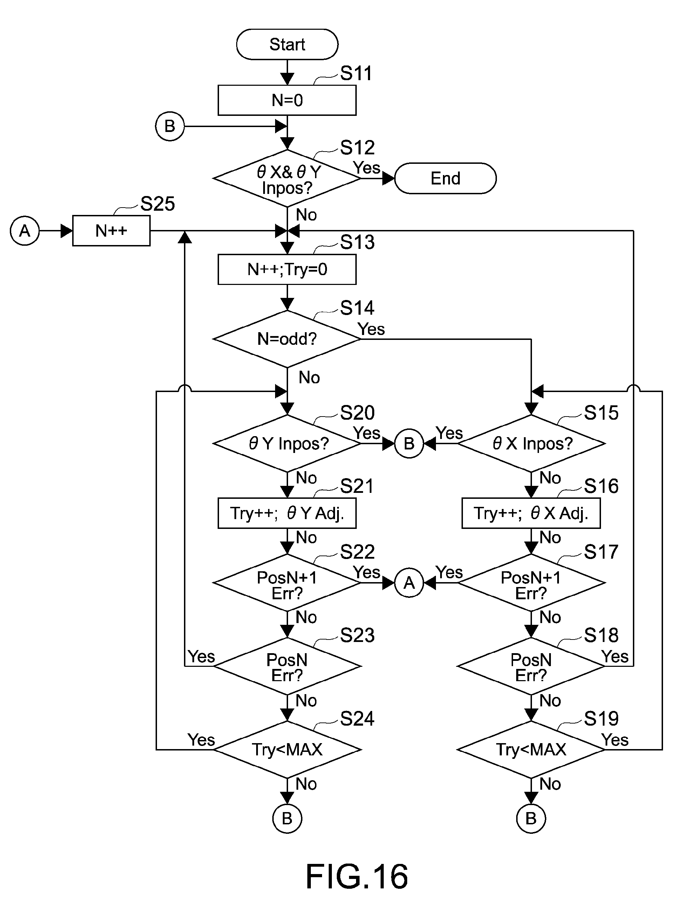

Next, a specific processing flow of measuring and correcting an inclination of the slide 16 of the present technology including the above-mentioned solving means will be described. Fig. 16 is a flowchart illustrating the flow of a specific example of the measuring method of the present technology including the solving means.

Firstly, the controller sets default value of N at zero (Step S11).

Next, the controller determines if an inclination of the X axis direction and an inclination of the Y axis direction are within the reference value or not (Step S12). Because an inclination value is not measured at first, it is determined that an inclination is not within a reference value (Step S12, No).

Next, the controller increments the value N by one, sets the value N at one, and sets the number of times of retry at zero (Step S13).

Next, the controller determines if the value N is odd or not (Step S14). Because N is one at first (Step S14, Yes), the controller proceeds to the process of Step S15.

In Step S15, firstly, the controller measures the height of the measured-point 1 by using the height gauge. Next, the controller instructs the stage moving unit to move the height gauge to the measured-point 2, and measures the height by using the height gauge. An inclination of the slide 16 in the X axis direction is measured based on the height of the measured-point 1 and the height of the measured-point 2. It is determined that if the measured inclination is within the reference value or not (Step S15).

In Step S15, if the measured inclination is not within the reference value (Step S15, No), the controller increments the number of times of retry by one, and corrects the inclination of the slide 16 by using the inclination correcting unit. Then the controller measures the height of the measured-point 2 by using the height gauge. Next, the controller instructs the stage moving unit to move the height gauge to the measured-point 1, and measures the height by using the height gauge. (Step S16).

Next, the controller determines if the measured-point N+1 is unmeasurable (Step S17).

If the measured-point N+1 is measured appropriately (Step S17, No), next, the controller determines if the measured-point N is unmeasurable (Step S18).

If the measured-point N is measured appropriately (Step S18, No), next, the controller determines if the number of times of retry reaches the maximum number of retry or not (Step S19).

If the number of times of retry does not reach the maximum number of retry (Step S19, Yes), the controller returns to Step S15, and determines if the newly-measured inclination in the X axis direction is within the reference value (Step S15).

Here, in Step S15, if the inclination in the X axis direction is within the reference value (Step S15, Yes), the controller returns to the process of Step S12.

In Step S12, the controller determines if the inclination in the X axis direction and the inclination in the Y axis direction are within the reference value (Step S12). Because an inclination value in the Y axis direction is not measured yet, it is determined that an inclination is not within the reference value (Step S12, No), and the controller proceeds to the process of Step S13.

Next, the controller increments the value N by one, sets the value N at two, and sets the number of times of retry at zero (Step S13).

Next, the controller determines if the value N is even or not (Step S14). Because N is two this time (Step S14, Yes), the controller proceeds to the process of Step S20.

Because the process of Steps S20 to S24 is similar to the process of Steps S15 to S19, description thereof will be omitted.

If measurement and correction are performed normally in Steps S20 to S24, the controller returns to the process of Step S12.

In Step S12, since the inclination in the X axis direction and the inclination in the Y axis direction are within the reference value (Step S12, Yes), the controller finishes the process.

Note that after the height of the measured-point N and the height of the measured-point N+1 are measured in Step S16 or Step S21, if the measured-point N+1 is unmeasurable (Step S17, Yes, or Step S22, Yes), the controller increases the value N by two in Step S25 and Step S13, and measures and corrects an inclination again.

Moreover, after the height of the measured-point N and the height of the measured-point N+1 are measured in Step S16 or Step S21, if the measured-point N is unmeasurable (Step S18, Yes, or Step S23, Yes), the controller increases the value N by one in Step S13, and measures and corrects an inclination again.

The flow of a specific example of the measuring method of the present technology including the above-mentioned means for solving the problems has been described.

<Development example 1 of the method using a height gauge>

Next, as one development example of the method using a height gauge, a method of approximating an inclination of a severely-curved slide 16 based on a plurality of planes and measuring the inclination will be described.

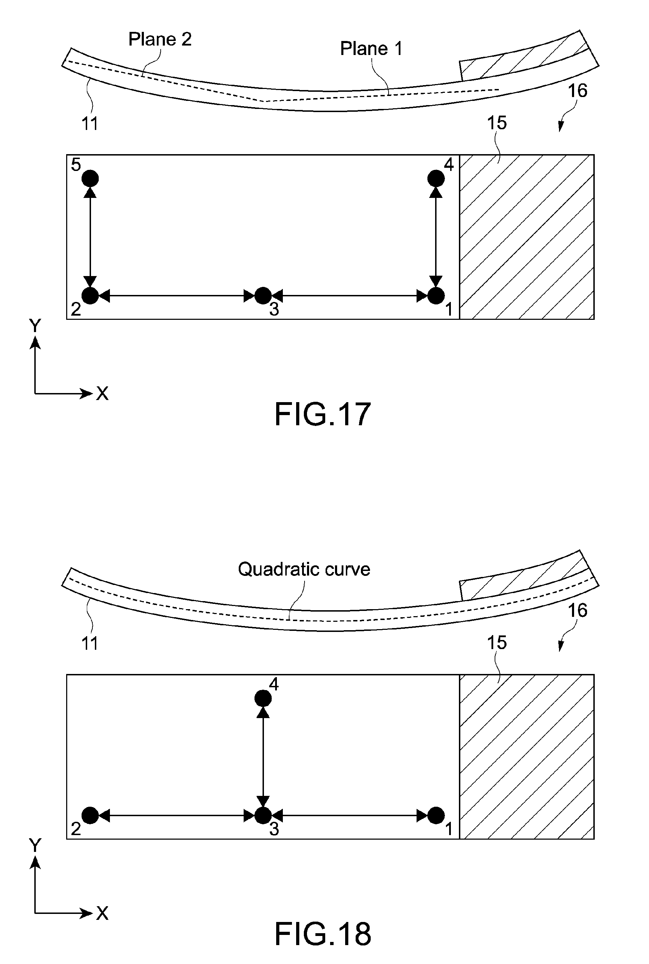

Fig. 17 is a diagram illustrating the method of approximating an inclination of a severely-curved slide 16 based on a plurality of planes and measuring the inclination.

(1) Firstly, the controller measures the height of the measured-point 1 and the height of the measured-point 2. Then the controller linear-interpolates the two measured heights.
(2) Next, the controller measures the height of the measured-point 3.
Here, if the difference between the measured height and the height obtained by linear interpolation is within a predetermined reference value, the controller determines that the curve is not so severe, and measures and corrects an inclination of the slide 16 by using the above-mentioned method using a height gauge.
If the difference between the measured height and the height obtained by linear interpolation exceeds the predetermined reference value, the controller proceeds to the following process.

(3) Further, the controller measures the height of the measured-point 4 and the height of measured-point 5. Then the controller obtains an inclination of a plane 1 based on the heights of the measured-points 1, 3, and 4. Moreover, the controller obtains an inclination of a plane 2 based on the heights of the measured-points 2, 3, and 5. In other words, the curve of the slide 16 is divided into two areas in the long-side (the X axis) direction of the slide glass 11, i.e., the area from the measured-point 1 to the measured-point 3 and the area from the measured-point 3 to the measured-point 2, and inclinations thereof are calculated.

(4) When images of the sample 12 are taken, the controller corrects the inclination of the area of the plane 1 and the inclination of the area of the plane 2 appropriately, and then takes images of the sample 12.

Note that in the above description, there is no unmeasurable point during measurement. If there is an unmeasurable point, similar to the above-mentioned method, a new virtual point may be provided and inclinations of a plurality of planes may be obtained.

An development example of approximating a curve based on a plurality of planes and measuring and correcting an inclination of a severely-curved slide 16 has been described.

<Development example 2 of the method using a height gauge>

Next, as another development example of the method using a height gauge, a method of approximating an inclination of a severely-curved slide 16 based on a quadratic equation and measuring the inclination will be described.

Fig. 18 is a diagram illustrating the method of approximating an inclination of a severely-curved slide 16 based on a quadratic equation and measuring the inclination.

(1) Firstly, the controller measures the heights of the measured-point 1, the measured-point 2, and the measured-point 3.

(2) Next, the controller obtains an approximating quadratic equation based on the obtained three heights by using the below-described method. The quadratic equation is used to correct an inclination in the X axis direction.

(3) Next, the controller measures the height of the measured-point 4, linear-interpolates the height of the measured-point 4 and the height of the measured-point 3, and obtains an inclination in the Y axis direction. Because the slide glass 11 rarely curves in the Y axis direction, linear interpolation can be used.

(4) When images of the sample 12 on the slide 11 are taken, the controller corrects an inclination based on the inclination in the X axis direction obtained by the quadratic equation and based on the inclination in the Y axis direction obtained by the linear interpolation, and takes images.

[How to derive quadratic equation]

Here, how to derive the quadratic equation will be described.

Above all, there are two types of methods of expressing a general expression of a quadratic equation, i.e., the type expressed by the equation (1) and the type expressed by the equation (2), as described below.

$$y = p(x-q)^2 + R \quad (1)$$

$$y = ax^2 + bx + c \quad (2)$$

p, q, and r are expressed as shown in the equation (3) based on the equations (1) and (2). q is to be obtained.
[Math. 1]

$$\left. \begin{aligned} p &= a \\ q &= -\frac{b}{2a} \\ r &= c - \frac{b^2}{4a} \end{aligned} \right\} \quad (3)$$

Moreover, an error function δ is defined based on the equation (2), and is expressed by the equation (4).
[Math. 2]

$$\delta_i = a x_i^2 + b x_i + c - y_i \quad (4)$$

In view of this, the total number of measurement, i.e., N (i=1 to N), is differentiated partially by a, b, and c. As a result, the equations (5), (6), and (7) are obtained.
[Math. 3]

$$\frac{\partial}{\partial a} \sum \delta_i^2 = \sum 2(a x_i^2 + b x_i + c - y_i) x_i^2 = 0 \quad (5)$$

$$\frac{\partial}{\partial b} \sum \delta_i^2 = \sum 2(a x_i^2 + b x_i + c - y_i) x_i = 0 \quad (6)$$

$$\frac{\partial}{\partial c} \sum \delta_i^2 = \sum 2(a x_i^2 + b x_i + c - y_i) = 0 \quad (7)$$

The equations (5), (6), and (7) are deformed, and the equations (5'), (6'), and (7') are therefore obtained.
[Math. 4]

$$a \sum x_i^4 + b \sum x_i^3 + c \sum x_i^2 = \sum (x_i^2 y_i) \quad (5')$$

$$a \sum x_i^3 + b \sum x_i^2 + c \sum x_i = \sum (x_i y_i) \quad (6')$$

$$a \sum x_i^2 + b \sum x_i + c \sum 1 = \sum (y_i) \quad (7')$$

A determinant of the equations (5'), (6'), and (7'), i.e., the equation (8), is obtained.
[Math. 5]

$$
\begin{bmatrix}
\sum x_i^4 & \sum x_i^3 & \sum x_i^2 \\
\sum x_i^3 & \sum x_i^2 & \sum x_i \\
\sum x_i^2 & \sum x_i & \sum 1
\end{bmatrix}
\begin{bmatrix}
a \\ b \\ c
\end{bmatrix}
=
\begin{bmatrix}
\sum (x_i^2 y_i) \\
\sum (x_i y_i) \\
\sum (y_i)
\end{bmatrix}
\quad (8)
$$

Here, the equation (8) is simply represented as Au=v, in which a matrix A and vectors u and v are used.
Here, if the matrix A is a regular matrix, $u = A^{-1}v$ is satisfied, and a, b, and c are obtained.
q is obtained based on the obtained values a and b by using the equation (3).
How to derive the quadratic equation has been described.

<Method using an autocollimator and a height gauge in combination (No. 1)>

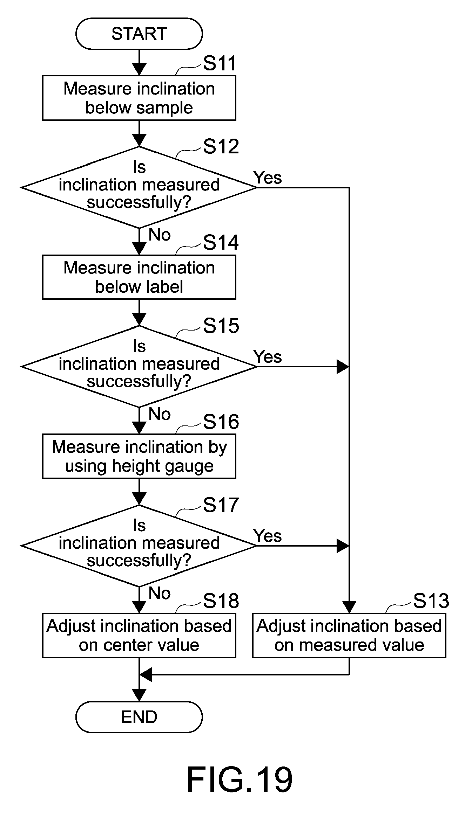

Here, the first method using the autocollimator 10 and the height gauge 20 in combination will be described. Fig. 19 is a flowchart showing the flow using the autocollimator 10 and the height gauge 20 in combination.
According to this combination method, firstly, an inclination is measured by using the method using the autocollimator 10, which requires less measurement time. Only if the autocollimator 10 fails to measure an inclination, an inclination is measured by using the height gauge 20.

Note that, in the following description, both the autocollimator and the height gauge are used to measure an inclination. However, as described above, they are not necessarily used together, and needless to say, each of them can be used independently.

Firstly, the controller measures an inclination of the portion of the slide 16, on which the sample 12 is mounted, by using the autocollimator 10 (Step S11).

Next, the controller determines if an inclination of the sample 12 portion is measured successfully or not (Step S12). Note that to fail to measure an inclination of the sample 12 portion means not only to be incapable of determining the position of the sample 12 on the slide 16 but also to be incapable of measuring an inclination because the amount of light reflected by the slide 16 is not enough, for example.

If an inclination is measured successfully (Step S12, Yes), the controller adjusts an inclination of the slide based on the measured inclination (Step S13).

If measurement of an inclination fails (Step S12, No), the controller measures an inclination of a portion of the slide 16 below the label portion 15 by using the autocollimator 10 (Step S14).

Next, the controller determines if an inclination of the label portion 15 is measured successfully or not (Step S15). Note that to fail to measure an inclination of the label portion 15 portion means to be incapable of measuring an inclination because the amount of light reflected by the slide 16 is not enough, for example.

If an inclination is measured successfully (Step S15, Yes), the controller adjusts an inclination of the slide based on the measured inclination (Step S13).

If measurement of an inclination fails (Step S15, No), the controller measures an inclination of the slide 16 by using the height gauge 20 (Step S16).

Next, the controller determines if an inclination is measured successfully by using the height gauge 20 or not (Step S17). Note that to fail to measure an inclination by using the height gauge 20 means to be incapable measuring heights of three points because measured-points include an unmeasurable point.

If an inclination is measured successfully (Step S17, Yes), the controller adjusts the inclination of the slide based on the measured inclination (Step S13).

If measurement of an inclination fails (Step S17, No), the controller adjusts the inclination of the slide 16 based on a center value (Step S18).

The first method using an autocollimator and a height gauge in combination has been described.

<Method using an autocollimator and a height gauge in combination (No. 2)>

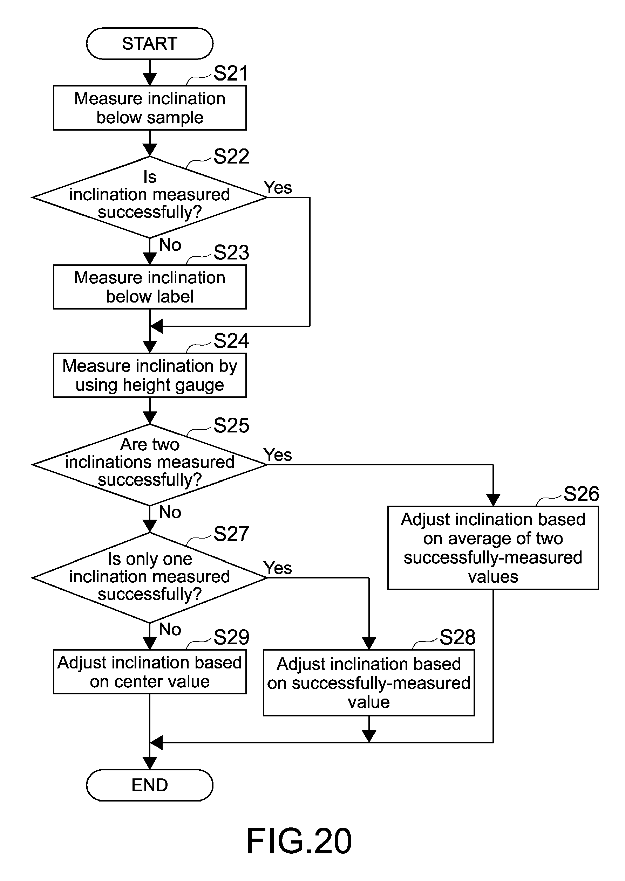

Here, the next method using an autocollimator and a height gauge in combination will be described. Fig. 20 is a flowchart showing another flow using the autocollimator and the height gauge in combination. Note that definitions of to fail to measure an inclination are the same as the above-mentioned definitions.

Also according to this combination method, firstly, an inclination is measured by using the autocollimator 10. The largest difference from the first method is that, even if an inclination is measured successfully by using the autocollimator 10, an inclination is measured by using the height gauge 20 subsequently.

Firstly, the controller measures an inclination of the portion of the slide 16, on which the sample 12 is mounted, by using the autocollimator 10 (Step S21).

Next, the controller determines if an inclination of the sample 12 portion is measured successfully or not (Step S22).

Only if measurement of an inclination fails (Step S22, No), the controller measures an inclination of a portion of the slide 16 below the label portion 15 by using the autocollimator 10 (Step S23).

Next, the controller measures an inclination of the slide 16 by using the height gauge 20 (Step S24).

Next, the controller determines if two inclinations are measured successfully by using both the autocollimator 10 and the height gauge 20 or not (Step S25).

If two inclinations are measured successfully (Step S25, Yes), the controller averages two successfully-measured values to thereby calculate an inclination, and adjusts the inclination (Step S26) .

If only one inclination is measured successfully (Step S25, No, and Step S27, Yes), the controller adjusts the inclination based on the one successfully-measured value (Step S28).

If no inclination is measured successfully (Step S27, No), the controller adjusts the inclination based on a center value (Step S29).

The next method using an autocollimator and a height gauge in combination has been described.

[Other structures of the present technology]

Note that the present technology may employ the following structures.

(1) An image obtaining apparatus, including:

a stage on which a slide is to be mounted, the slide being obtained by applying a sample to a slide glass and covering the sample with a cover glass;
a stage moving unit configured to move the stage;
a detection unit configured to detect a position of the sample on the slide;
an optical angle measuring apparatus configured to irradiate the slide glass mounted on the stage with laser light from the side opposite to the side on which the sample is mounted, the optical angle measuring apparatus being capable of detecting an inclination of the slide glass; and
a controller configured to control the stage moving unit such that the position of the sample on the slide is irradiated with the laser light, and to cause the optical angle measuring apparatus to detect the inclination.

(2) The image obtaining apparatus according to (1), further including:

an inclination correcting unit configured to correct the inclination of a slide glass, in which
the controller is configured
to cause the inclination correcting unit to correct the detected inclination.

(3) The image obtaining apparatus according to (1) or (2), in which
the detection unit is configured
to change an object-to-be-detected from the position of the sample to the position of a label portion, and to detect the position of the label portion, and
the controller is configured
to control the stage moving unit such that the back side of the label portion is irradiated with the laser light, and to cause the optical angle measuring apparatus to detect the inclination.

(4) The image obtaining apparatus according to (1) or (2), in which
the detection unit is configured
to detect the position of a label portion of the slide if the position of the sample is not detected, and
the controller is configured
to control the stage moving unit such that the back side of the label portion is irradiated with the laser light, and to cause the optical angle measuring apparatus to detect the inclination.

(5) The image obtaining apparatus according to (4), further including:

a distance measuring apparatus configured to irradiate a measured-point on the surface of the slide glass with laser light, to receive light reflected by the surface of the slide glass, and to measure the distance to the surface of the slide glass, in which
the controller is configured
if the optical angle measuring apparatus fails to detect the inclination at the back side of the label portion,
to cause the distance measuring apparatus to detect the inclination.

(6) The image obtaining apparatus according to (4), further including:

a distance measuring apparatus configured to irradiate a measured-point on the surface of the slide glass with laser light, to receive light reflected by the surface of the slide glass, and to measure the distance to the surface of the slide glass, in which
the controller is configured
to cause the optical angle measuring apparatus to detect the inclination, in addition,
to cause the distance measuring apparatus to detect the inclination, and
to cause the inclination correcting unit to correct the inclination based on the average of the detected inclinations.

(7) An image obtaining apparatus, including:

a stage on which a slide is to be mounted, the slide being obtained by applying a sample to a slide glass and covering the sample with a cover glass;

a stage moving unit configured to move the stage;

an image-taking unit configured to take an image of a whole slide;

a detection unit configured to detect a position of the sample on the slide;

a distance measuring apparatus configured to irradiate a measured-point on the surface of the slide glass with laser light, to receive light reflected by the surface of the slide glass, and to measure the distance to the surface of the slide glass; and

a controller configured

to control the inclination correcting unit such that the inclination correcting unit sets a first measured-point, a second measured-point, and a third measured-point, the first measured-point, the second measured-point, and the third measured-point being three measured-points corresponding to the vertices of a right triangle, the first measured-point, the second measured-point, and the third measured-point being on a first corner, a second corner, and a third corner, the first corner, the second corner, the third corner, and a fourth corner being four corners of a peripheral area of the slide glass, and such that the inclination correcting unit calculates and corrects an inclination of the slide glass in a first direction based on measurement results at the first measured-point and the second measured-point obtained by the distance measuring apparatus, the first measured-point and the second measured-point being on one side extending in the first direction out of the two sides of the right triangle perpendicular to each other, and

to control the inclination correcting unit such that the inclination correcting unit calculates and corrects an inclination of the slide glass in a second direction based on measurement results at the second measured-point and the third measured-point obtained by the distance measuring apparatus, the second measured-point and the third measured-point being on the other side extending in the second direction.

(8) The image obtaining apparatus according to (7), in which
the controller is configured
if measurement of the distance to a measured-point fails,
to set at least a new fourth measured-point on the fourth corner, and to cause the distance measuring apparatus to measure the distance to the fourth measured-points.

(9) The image obtaining apparatus according to (8), in which
the controller is configured
if measurement at the first measured-point fails, to calculate and correct an inclination in the first direction by using the third measured-point and the fourth measured-point,
if measurement at the second measured-point fails, to calculate and correct an inclination in the second direction by using the fourth measured-point and a fifth measured-point newly set on the first corner, and
if measurement at the third measured-point fails, to calculate and correct an inclination in the second direction by using the fourth measured-point and a fifth measured-point newly set on the first corner, and to calculate and correct an inclination in the first direction by using the fifth measured-point and a sixth measured-point newly set on the second corner.

(10) The image obtaining apparatus according to any one of (7) to (9), in which
the distance measuring apparatus is configured
to measure the distance from the side opposite to the side of the slide glass on which the sample is mounted, the slide glass being mounted on the stage.

(11) A method of measuring an inclination of a slide, including:

mounting a slide on a stage, the slide being obtained by interposing a sample between a slide glass and a cover glass;

detecting a position of the sample on the slide; and

irradiating the detected position of the sample with laser light from the side opposite to the side of the slide glass on which the sample is mounted, the laser light being from an optical angle measuring apparatus, and detecting an inclination of the slide glass on the stage.

Description of Numerals

| 10 | autocollimator |
|---|---|
| 11 | slide glass |
| 12 | sample |
| 13 | mountant |

14    cover glass
15    label portion
16    slide
20    height gauge

**Claims**

1.  An image obtaining apparatus, comprising:

    a stage on which a slide is to be mounted, the slide being obtained by applying a sample to a slide glass and covering the sample with a cover glass;
    a stage moving unit configured to move the stage;
    a detection unit configured to detect a position of the sample on the slide;
    an optical angle measuring apparatus configured to irradiate the slide glass mounted on the stage with laser light from the side opposite to the side on which the sample is mounted, the optical angle measuring apparatus being capable of detecting an inclination of the slide glass; and
    a controller configured to control the stage moving unit such that the position of the sample on the slide is irradiated with the laser light, and to cause the optical angle measuring apparatus to detect the inclination.

2.  The image obtaining apparatus according to claim 1, further comprising:

    an inclination correcting unit configured to correct the inclination of a slide glass, wherein
    the controller is configured
    to cause the inclination correcting unit to correct the detected inclination.

3.  The image obtaining apparatus according to claim 2, wherein
    the detection unit is configured
    to change an object-to-be-detected from the position of the sample to the position of a label portion, and to detect the position of the label portion, and
    the controller is configured
    to control the stage moving unit such that the back side of the label portion is irradiated with the laser light, and to cause the optical angle measuring apparatus to detect the inclination.

4.  The image obtaining apparatus according to claim 2, wherein
    the detection unit is configured
    to detect the position of a label portion of the slide if the position of the sample is not detected, and
    the controller is configured
    to control the stage moving unit such that the back side of the label portion is irradiated with the laser light, and to cause the optical angle measuring apparatus to detect the inclination.

5.  The image obtaining apparatus according to claim 2, further comprising:

    a distance measuring apparatus configured to irradiate a measured-point on the surface of the slide glass with laser light, to receive light reflected by the surface of the slide glass, and to measure the distance to the surface of the slide glass, wherein
    the controller is configured
    to control the inclination correcting unit such that the inclination correcting unit sets a first measured-point, a second measured-point, and a third measured-point, the first measured-point, the second measured-point, and the third measured-point being three measured-points corresponding to the vertices of a right triangle, the first measured-point, the second measured-point, and the third measured-point being on a first corner, a second corner, and a third corner, the first corner, the second corner, the third corner, and a fourth corner being four corners of a peripheral area of the slide glass, and such that the inclination correcting unit calculates and corrects an inclination of the slide glass in a first direction based on measurement results at the first measured-point and the second measured-point obtained by the distance measuring apparatus, the first measured-point and the second measured-point being on one side extending in the first direction out of the two sides of the right triangle perpendicular to each other, and
    to control the inclination correcting unit such that the inclination correcting unit calculates and corrects an inclination of the slide glass in a second direction based on measurement results at the second measured-point and the third measured-point obtained by the distance measuring apparatus, the second measured-point and the third measured-point being on the other side extending in the second direction.

6. The image obtaining apparatus according to claim 5, wherein
the controller is configured
if measurement of the distance to a measured-point fails,
to set at least a new fourth measured-point on the fourth corner, and to cause the distance measuring apparatus to measure the distance to the fourth measured-points.

7. The image obtaining apparatus according to claim 6, wherein
the controller is configured
if measurement at the first measured-point fails, to calculate and correct an inclination in the first direction by using the third measured-point and the fourth measured-point,
if measurement at the second measured-point fails, to calculate and correct an inclination in the second direction by using the fourth measured-point and a fifth measured-point newly set on the first corner, and
if measurement at the third measured-point fails, to calculate and correct an inclination in the second direction by using the fourth measured-point and a fifth measured-point newly set on the first corner, and to calculate and correct an inclination in the first direction by using the fifth measured-point and a sixth measured-point newly set on the second corner.

8. The image obtaining apparatus according to claim 7, wherein
the distance measuring apparatus is configured
to measure the distance from the side opposite to the side of the slide glass on which the sample is mounted, the slide glass being mounted on the stage.

9. The image obtaining apparatus according to claim 4, further comprising:

a distance measuring apparatus configured to irradiate a measured-point on the surface of the slide glass with laser light, to receive light reflected by the surface of the slide glass, and to measure the distance to the surface of the slide glass, wherein
the controller is configured
if the optical angle measuring apparatus fails to detect the inclination at the back side of the label portion,
to cause the distance measuring apparatus to detect the inclination.

10. The image obtaining apparatus according to claim 4, further comprising:

a distance measuring apparatus configured to irradiate a measured-point on the surface of the slide glass with laser light, to receive light reflected by the surface of the slide glass, and to measure the distance to the surface of the slide glass, wherein
the controller is configured
to cause the optical angle measuring apparatus to detect the inclination, in addition,
to cause the distance measuring apparatus to detect the inclination, and
to cause the inclination correcting unit to correct the inclination based on the average of the detected inclinations.

11. A method of measuring an inclination of a slide, comprising:

mounting a slide on a stage, the slide being obtained by interposing a sample between a slide glass and a cover glass;
detecting a position of the sample on the slide; and
irradiating the detected position of the sample with laser light from the side opposite to the side of the slide glass on which the sample is mounted, the laser light being from an optical angle measuring apparatus, and detecting an inclination of the slide glass on the stage.

Sample

Label

Slide

~10

Autocollimator

## FIG.1

16: Slide

13: Mountant

14: Cover glass

15: Label

B | B'

A | A'

12: Sample

11: Slide glass

## FIG.2

Intensity of
reflected light

A'

B'

x

FIG.3

14: Cover glass

B B'

A A'

FIG.4

Synthesized center of gravity (inclination)

Normal center of gravity (inclination)

Back-surface spot

Front-surface spot

FIG.5

Label

Slide

10B

Detector

10A

Laser
emitter

FIG.6

15: Label

Slide

11

10 Autocollimator

FIG.7

Detected
inclination

15: Label

12

Inclination
to be
detected

Slide

11

10 Autocollimator

FIG.8

FIG.9

FIG.10

START

S1
Take thumbnail image

S2
Detect coordinate of portion on which sample exists

S5
Is coordinate detected?   No

Yes   S3
Move stage to coordinate

S6
Move stage to label portion

S4
Measure inclination

S7
Measure inclination

END

FIG.11

12
Slide
15

11

Height gauge   20   20   20   20

FIG.12

16

Measured-point

15

**FIG.13**

16

15

3

Y

2

1

X

Measured-point

**FIG.14**

FIG.15

Start

N=0 —S11

B →

θX& θY
Inpos? —S12    Yes → End

No

S25
A → N++ →

N++;Try=0 —S13

N=odd? —S14    Yes →

No

θY Inpos? —S20    Yes → B ← Yes    θX Inpos? —S15

No    S21                          No    S16

Try++; θY Adj.                    Try++; θX Adj.

No    S22                          No    S17

PosN+1
Err? —S22    Yes → A ← Yes    PosN+1
Err? —S17

No    S23                          No    S18

Yes ← PosN
Err? —S23                          PosN
Err? —S18    → Yes

No    S24                          No    S19

Yes ← Try<MAX —S24               Try<MAX —S19    → Yes

No                                 No

B                                  B

FIG.16

Plane 2    Plane 1

11    15    16

5    4

Y

2    3    1

X

# FIG.17

Quadratic curve

11    15    16

4

Y

2    3    1

X

# FIG.18

START

_~S11_

Measure inclination
below sample

_~S12_

Is
inclination measured
successfully?

Yes

No _~S14_

Measure inclination
below label

_~S15_

Is
inclination measured
successfully?

Yes

No _~S16_

Measure inclination by
using height gauge

_~S17_

Is
inclination measured
successfully?

Yes

No _~S18_

Adjust inclination based
on center value

_~S13_

Adjust inclination based
on measured value

END

FIG.19

START

S21
Measure inclination
below sample

S22
Is inclination measured
successfully? — Yes

No

S23
Measure inclination
below label

S24
Measure inclination by
using height gauge

S25
Are two inclinations measured
successfully? — Yes

No

S27
Is only one inclination measured
successfully? — Yes

No

S26
Adjust inclination based
on average of two
successfully-measured
values

S29
Adjust inclination based
on center value

S28
Adjust inclination based
on successfully-measured
value

END

FIG.20

## INTERNATIONAL SEARCH REPORT

| | International application No. |
| --- | --- |
| | PCT/JP2013/005965 |

**A. CLASSIFICATION OF SUBJECT MATTER**

*G02B21/34*(2006.01)i, *G01B11/00*(2006.01)i, *G01B11/26*(2006.01)i, *G02B21/36* (2006.01)i

According to International Patent Classification (IPC) or to both national classification and IPC

**B. FIELDS SEARCHED**

Minimum documentation searched (classification system followed by classification symbols)
G02B21/34, G01B11/00, G01B11/26, G02B21/36

Documentation searched other than minimum documentation to the extent that such documents are included in the fields searched
Jitsuyo Shinan Koho      1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-14078 A  (Sony Corp.),<br>19 January 2012 (19.01.2012),<br>paragraphs [0033] to [0036], [0055] to [0059],<br>[0083] to [0089], [0103]; fig. 1 to 24<br>& US 2012/0002034 A1    & EP 2402813 A2<br>& CN 102313982 A       & KR 10-2012-0003376 A | 1-11 |
| X | JP 2010-101959 A  (Olympus Corp.),<br>06 May 2010 (06.05.2010),<br>paragraphs [0018] to [0067]; fig. 1 to 16<br>(Family: none) | 1-11 |
| A | JP 2012-98351 A  (Canon Inc.),<br>24 May 2012 (24.05.2012),<br>paragraphs [0013] to [0045]; fig. 1 to 15<br>& US 2013/0169788 A1    & WO 2012/056920 A1<br>& CN 103180769 A | 1-11 |

☒ Further documents are listed in the continuation of Box C.      ☐ See patent family annex.

| | |
| --- | --- |
| *     Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 08 November, 2013 (08.11.13) | 26 November, 2013 (26.11.13) |

| Name and mailing address of the ISA/<br>   Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2013/005965

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2012-108476 A  (Canon Inc.),<br>07 June 2012 (07.06.2012),<br>paragraphs [0010] to [0056]; fig. 1 to 16<br>& US 2013/0169788 A1    & WO 2012/056920 A1<br>& CN 103180769 A | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012013996 A
- JP 2011221280 A